# EUROPÄISCHE PATENTANMELDUNG

(11) **EP 1 640 253 A1**
(43) Veröffentlichungstag der Anmeldung: **29.03.2006**
(21) Anmeldenummer: 05018366.4
(22) Anmeldetag: 24.08.2005
(51) Int. Cl.: B62D 29/04, B62D 25/06

(54) **Verbundbauteil, insbesondere Karosserieanbauteil für ein Fahrzeug, und Verfahren zum Herstellen eines solchen Verbundbauteils**

(30) Priorität: 13.09.2004 DE 102004044159
(71) Anmelder: ArvinMeritor GmbH, 63128 Dietzenbach (DE)
(72) Erfinder: Ludwig, Matthias, 38159 Vechelde (DE); Lutz, Marcus, 38518 Gifhorn (DE); Niebuhr, Frank, 38518 Wilsche (DE); Niesner, Tobias, 38518 Gifhorn (DE); Batke, Harald, 38539 Müden/Aller (DE)
(74) Vertreter: Kitzhofer, Thomas

(57) **Zusammenfassung**

Die Erfindung betrifft ein Verbundbauteil (12), insbesondere ein Karosserieanbauteil für ein Fahrzeug, mit einer durch eine Außenhautfolie (16) gebildeten Außenhaut (14) des Verbundbauteils (12), insbesondere des Fahrzeugs, einer rückseitig der Außenhautfolie (16) durch Hinterschäumen oder -spritzen aufgebrachten Innenschicht (18) aus Kunststoff, einem Montageteil, das in einer Vertiefung (26) der Außenhautfolie (16) sitzt und darin verankert ist, wobei eine Zwischenfolie (22) zwischen dem Montageteil und der Außenhautfolie (16) liegt und zumindest abschnittsweise einen direkten Kontakt zwischen Montageteil und Außenhautfolie (16) verhindert. Die Erfindung betrifft auch ein Verfahren zur Herstellung eines solchen Verbundbauteils (12).

## Beschreibung

Die Erfindung betrifft ein Verbundbauteil, insbesondere ein Karosserieanbauteil für ein Fahrzeug, mit einer durch eine Außenhautfolie gebildeten Außenhaut, insbesondere des Fahrzeugs, einer rückseitig der Außenhautfolie sdurch Hinterschäumen oder ―spritzen aufgebrachten Innenschicht aus Kunststoff, einem Montageteil, das in einer Vertiefung der Außenhautfolie sitzt und darin verankert ist, sowie ein Verfahren zur Herstellung eines solchen Verbundbauteils.

Karosserieanbauteile für ein Fahrzeug sind solche Teile, die an der Fahrzeugkarosserie angebracht werden, die die Außenhaut (sichtbare Außenseite) des Fahrzeugs im fertig montiertem Zustand wenigstens abschnittsweise definieren und von außen sichtbar sind. Karosserieanbauteile können Klappen (Türen, Deckel), Stoßfänger oder Dachmodule sein, worunter auch Dachmodule mit oder ohne Dachöffnungssysteme fallen.

Es ist bereits bekannt, Verbundbauteile mit einer außenseitigen, vorzugsweise durchgefärbten Kunststoffolie herzustellen, die als Außenhaut des Verbundbauteils dient. Rückseitig wird die Außenhautfolie hinterschäumt oder hinterspritzt, insbesondere mit einem glasfaserverstärkten PU-Material. Wenn an einem Verbundbauteil eines Fahrzeugs Anbauteile befestigt werden sollen, beispielsweise ein Deckel eines Spoilerdachs eines Dachmoduls, sind Montageteile, z.B. Führungsschienen notwendig. Es sind Führungsschienen bekannt, die in einer Vertiefung der Außenhautfolie sitzen und darin formschlüssig verankert sind. Durch die unterschiedlichen Materialeigenschaften der Führungsschienen oder, allgemeiner, der Montageteile und der hinterschäumten Außenhautfolie kann es zu unerwünschten Nebengeräuschen, wie Knarzen oder Quietschen kommen, die von den Fahrzeuginsassen als belästigend empfunden werden.

Die Aufgabe der Erfindung besteht darin, ein Verbundbauteil zu schaffen, das es mit geringem Aufwand ermöglicht, Montageteile zu integrieren, ohne daß unerwünschte, störende Nebengeräusche bei äußeren Belastungen auftreten.

Diese Probleme werden bei dem eingangs genannten Verbundbauteil dadurch gelöst, daß eine Zwischenfolie vorgesehen ist, die zwischen dem Montageteil und der Außenhautfolie liegt und zumindest abschnittsweise einen direkten Kontakt zwischen Montageteil und Außenhautfolie verhindert. Die mit der Erfindung erzielten Vorteile bestehen insbesondere darin, daß die Zwischenfolie als Puffer oder Gleitschicht bei Relativbewegungen aufgrund unterschiedlicher Biegeelastizitäten bzw. Torsionselastizitäten der hinterschäumten oder hinterspritzten Außenhautfolie und des Montageteils wirkt und somit unerwünschte, störende Nebengeräusche aufgrund schlechter Reibpaarungen verhindert.

Vorzugsweise ist das Montageteil von der Außenhautfolie abschnittsweise umgeben und dadurch formschlüssig und/oder kraftschlüssig in der Vertiefung verankert. Der beim Schäumen/Spritzen der Innenschicht entstehende Druck des Kunststoffinaterials dient dabei dazu, die Außenhautfolie fest gegen das Montageteil zu drücken und dabei so zu verformen, daß das Montageteil formschlüssig bzw. kraftschlüssig in der Außenhautfolie aufgenommen ist.

Da das Montageteil bevorzugt an mindestens einer Seitenfläche mit wenigstens einem Verankerungsvorsprung versehen ist, ist eine formschlüssige Verankerung des Montageteils in der Außenhautfolie leicht möglich.

Vorzugsweise drückt beim Schäumen/Spritzen der Innenschicht der Kunststoff die Außenhautfolie und die Zwischenfolie fest gegen das Montageteil und den Verankerungsvorsprung, so daß eine entsprechende Einbuchtung in Außenhautfolie und Zwischenfolie entsteht.

Als Montageteil wird insbesondere eine Schiene verwendet, z.B. eine Aluminiumschiene, wobei die Schiene eine Führungsschiene für den Deckel eines Spoilerdaches sein kann. Spoilerdächer sind Fahrzeugdächer, bei denen der verfahrbare Deckel über die Außenhaut verfahren wird.

Das erfindungsgemäße Verbundbauteil kann insbesondere ein Dachmodul eines Fahrzeugs sein. Das Montageteil ermöglicht es dann, Anbauteile, die an einem Dachmodul angebracht werden können, in einfacher Weise zu befestigen.

Gemäß der bevorzugten Ausführungsform ist das Montageteil auf derjenigen Seite, die nicht von der Außenhautfolie und der Zwischenfolie bedeckt ist, über eine Öffnung im Montageteil von außen zugänglich. Dadurch kann das Montageteil beispielsweise der Verankerung eines Lastenträgers oder als Führungsschiene eines verschieblichen Deckels dienen.

Ferner ist die Öffnung bevorzugt von einer beweglichen Abdeckung bedeckt, wobei die Abdeckung auch einen Rand der Zwischenfolie im Bereich des Montageteils abdecken kann. Dadurch ist die Zwischenfolie von außen nicht mehr sichtbar und beeinträchtigt das Erscheinungsbild des Verbundbauteils nicht. Ferner kann der Rand der Zwischenfolie erst im befestigten Zustand des Montageteils mit großen Toleranzen beschnitten werden, da er anschließend ohnehin abgedeckt wird.

Die Abdeckung ist z.B. über Fortsätze am Montageteil formschlüssig angebracht.

Vorzugsweise ist die Innenschicht mit Glasfaserabschnitten verstärkt. Dies erfolgt vor allem mittels des bekannten LFI (Long Fiber Injection)-Verfahrens. Dadurch ist in jedem Fall die Festigkeit des Verbundbauteils ausreichend, da die Innenschicht für die notwendige Festigkeit sorgt. Die Erfindung ist somit nicht nur für Dachmodule, sondern auch für Hardtops, Innenhimmel und andere Kfz-Außen- und Innenverkleidungs-, Beplankungs- und Strukturbauteile anwendbar.

Gemäß der bevorzugten Ausführungsform ist die Zwischenfolie eine PE-Folie, wobei sie eine Materialstärke zwischen 0,4 bis 0,2 mm aufweist. Somit ist sie um ein Vielfaches dünner als die Außenhautfolie.

Das erfindungsgemäße Verfahren zum Herstellen eines Verbundbauteils ist durch folgende Schritte gekennzeichnet:
a) Bereitstellen einer durch eine Außenhautfolie gebildeten, nach dem Herstellen von außen sichtbaren Außenhaut des Verbundbauteils, wobei die Außenhautfolie eine Vertiefung aufweist,
b) Einlegen eines Montageteils in die Vertiefung, wobei eine Zwischenfolie zwischen Montageteil und angrenzender Außenhautfolie positioniert ist oder wird, die wenigstens abschnittsweise einen direkten Kontakt zwischen Montageteil und Außenhautfolie verhindert,
c) Einlegen des Montageteils samt Zwischenfolie und Außenhautfolie in eine Schäum- oder Spritzform,
d) rückseitiges Hinterschäumen oder ―spritzen der Außenhautfolie, wobei eine Innenschicht erzeugt und dabei ein Druck auf die Außenhautfolie ausgeübt wird, der die Außenhautfolie gegen das Montageteil drückt und es fest in der Vertiefung verankert.

Dieses Verfahren nutzt den bei der Herstellung von Verbundbauteilen entstehenden Druck des flüssigen Kunststoffs (z.B. Schaumdruck), um das Montageteil an der Außenhautfolie zu befestigen. Somit sind keine zusätzlichen Verfahrensschritte erforderlich, was zu geringeren Verfahrenskosten führt. Die Zwischenfolie zwischen dem Montageteil und der Außenhautfolie ist oder wird bereits vor dem Hinterschäumen oder -spritzen eingelegt oder auf eines der Teile (Montageteil oder Außenhautfolie) aufgebracht.

Die Außenhautfolie ist insbesondere aus thermoplastischem Material, die unter Erwärmen plastisch umgeformt wird, beispielsweise in einem Tiefziehprozeß.

Vorzugsweise nimmt die Außenhautfolie beim Tiefziehen die Umfangsform des Montageteils im Bereich der Vertiefung weitgehend an. Auf diese Weise kann die erforderliche Vertiefung sehr kostengünstig hergestellt werden.

Es ist vorteilhaft, beim Hinterschäumen oder -spritzen Glasfaserabschnitte in den flüssigen Kunststoff einzubringen. Dadurch wird die notwendige Festigkeit des Verbundbauteils erreicht.

Bei einer bevorzugten Ausführungsform ist die Zwischenfolie eine die Außenhautfolie wenigstens großteils, vorzugsweise komplett abdeckende Schutzfolie. Derartige Schutzfolien sind vorteilhaft, damit die später sichtbare Außenhaut bei der Herstellung des Verbundbauteils oder beim Transport nicht beschädigt wird. Das fertige Verbundbauteil kann gegebenenfalls mit der Schutzfolie zum Automobilhersteller geliefert werden, und erst dieser entfernt die Schutzfolie unmittelbar vor der Montage des Verbundbauteils, um Beschädigungen oder Verunreinigungen zu vermeiden. Somit kann die Schutzfolie sowohl Schutz des Verbundbauteils vor Beschädigungen oder Verunreinigungen gewährleisten als auch die Aufgabe der Zwischenfolie übernehmen und störende Nebengeräusche verhindern. Durch die Übernahme beider Aufgaben ersetzt sie eine zweite Zwischenfolie, wodurch die Kosten enorm verringert werden.

Vorzugsweise weist das erfindungsgemäße Verfahren ein Entfernen der Schutzfolie von der Außenhautfolie ausgenommen im Bereich zwischen Montageteil und Außenhaut auf, z.B. durch Beschneiden der Schutzfolie.

Weitere Merkmale und Vorteile der Erfindung ergeben sich aus der nachfolgenden Beschreibung und den Zeichnungen. Die Erfindung wird nachfolgend anhand der bevorzugten Ausführungsform beschrieben, die in den Zeichnungen dargestellt ist. In den Zeichnungen zeigen:
- Figur 1 eine schematische Perspektivansicht eines Fahrzeugdachs mit einem erfindungsgemäß hergestellten Verbundbauteil in Form eines Dachmoduls,
- Figur 2 eine vergrößerte Schnittansicht durch das Verbundbauteil nach Figur 1 entlang der Linie II-II, und
- Figur 3 eine vergrößerte Schnittansicht durch das Verbundbauteil nach Figur 1 in dem Schäum- oder Spritzwerkzeug vor dem Schäum- oder Spritzvorgang.

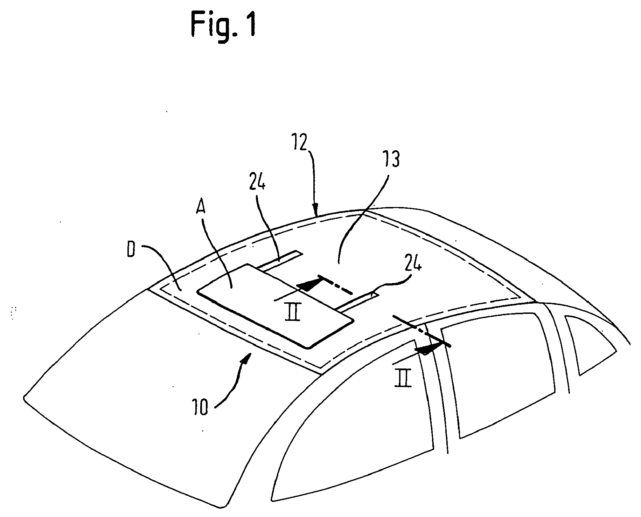

In Figur 1 ist ein öffnungsfähiges Fahrzeugdach 10 dargestellt, dessen Außenhaut wenigstens abschnittsweise durch ein Karosserieanbauteil in Form eines Verbundbauteils 12 definiert ist. Im gezeigten Beispiel ist das Verbundbauteil 12 das gesamte Dachmodul D. Es kann jedoch auch der verfahrbare Deckel A des Fahrzeugdachs 10 sein. Andere Anwendungsmöglichkeiten der Erfindung sind Türen, Klappen, Hauben oder Stoßfänger eines Fahrzeugs oder Teile der Innenverkleidung.

Beim Fahrzeugdach 10 nach Figur 1 handelt es sich um ein Spoilerdach, bei dem der Deckel A über seitliche, im feststehenden Dachabschnitt 13 integrierte Führungsschienen 24 nach hinten über den Dachabschnitt 13 verfahrbar ist.

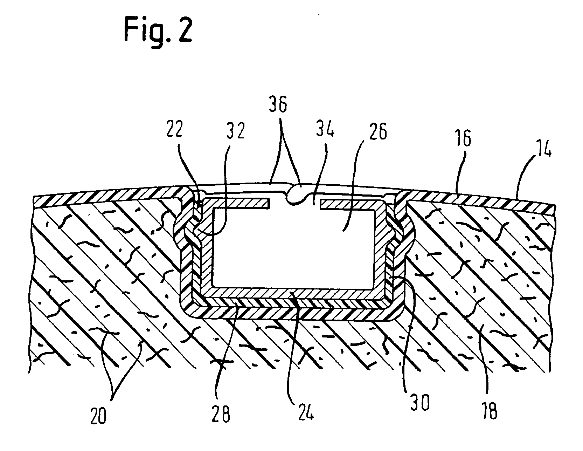

Figur 2 zeigt das Verbundbauteil 12, das aus mehreren miteinander verbundenen Schichten besteht. Die im eingebauten Zustand sichtbare Außenhaut 14 ist durch eine Außenhautfolie 16 definiert, die aus einer maximal etwa 1,5 mm dicken Kunststoffolie, insbesondere einer zweischichtigen Koextrusionsfolie besteht. Die äußere Schicht ist eine harte Deckschicht, vorzugsweise aus Polymethylmethacrylat (PMMA), welche innenseitig mit einer durchgefärbten Trägerschicht, vorzugsweise aus einer Mischung aus Polycarbonat (PC) und Acrylnitril-Styrol-Acrylsäureester-Copolymerisat (ASA), verbunden ist. Die Deckschicht ist nur etwa 0,4 mm dick und kann durchsichtig oder ebenfalls durchgefärbt sein. Die einzelnen Schichten sind nicht separat dargestellt. Wegen der Durchfärbung der Schichten kann eine außenseitige Lackierung entfallen.

Die Außenhautfolie 16 ist rückseitig hinterschäumt oder ―spritzt. Die entsprechend hergestellte Innenschicht ist mit 18 bezeichnet. Sie besteht aus PU-Material, in das Glasfaserabschnitte 20 ungeordnet eingebracht werden. Die Innenschicht 18 wird vorzugsweise durch das LFI (Long Fiber Injection)-Verfahren hergestellt.

Eine dünne Zwischenfolie 22 ist zwischen der Außenhautfolie 16 und der Führungsschiene 24, die ein Montageteil darstellt, zumindest abschnittsweise im Bereich der Führungsschiene 24 angeordnet. Die Zwischenfolie 22 ist um ein Vielfaches dünner als die Außenhautfolie 16, die die Außenhaut 14 abschnittsweise bildet, und wurde in den Figuren nur zur besseren Darstellung übertrieben dick gezeichnet.

In einer Vertiefung 26 der Außenhautfolie 16, mit einem Boden 28 und zwei Seitenwänden 30, ist die Führungsschiene 24 angeordnet. Die Führungsschiene 24 ist aus einem Aluminiumstrangpreßprofil mit rechteckigem, nach oben offenen Querschnitt. Die Führungsschiene 24 ist an den Seitenwänden 30 mit wenigstens einem seitlichen Verankerungsvorsprung 32 versehen.

Die Führungsschiene 24 weist nach oben eine Öffnung 34 auf. Diese Öffnung 34 ist durch eine Abdeckung 36 geschlossen. Die Abdeckung 36 ist als separates Teil ausgebildet und steht nicht über die Umhüllende der Außenhaut 14 vor. Vorzugsweise ist die Abdeckung 36 aus Kunststoff, da sie somit sehr leicht ist. Sie ist zweiteilig ausgeführt, damit ein in der Führungsschiene 24 eingreifender Gleiter sie abschnittsweise zur Freilegung der Öffnung 34 verdrängen kann. Die oberen Ränder der Zwischenfolie 22 werden von der Abdeckung 36 nach außen hin vollständig verdeckt.

Die Führungsschiene 24 hat eine andere Biegeelastizität bzw. Torsionselastizität als die Einheit von Außenhautfolie 16 und Innenschicht 18. Daher können ohne die Zwischenfolie 22 störende Nebengeräusche bei starker Belastung und elastischer Verformung des Dachmoduls auftreten.

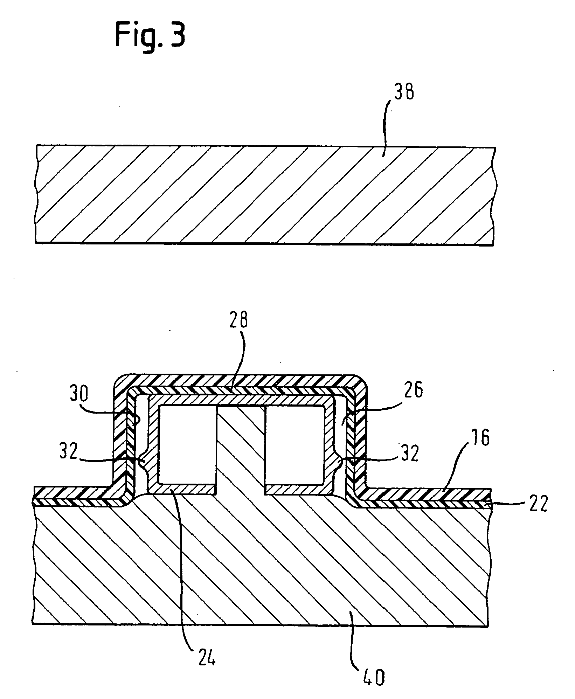

Im folgenden wird anhand der Figur 3 das Verfahren zum Herstellen des Verbundbauteils 12 beschrieben.

Die Außenhautfolie 16 und die Zwischenfolie 22 werden üblicherweise als Einheit in großen Rollen oder Platten komplett angeliefert, wobei die Zwischenfolie 22 die nach dem Hinterschäumen sichtbare Oberfläche der Außenhautfolie 16 vollständig abdeckt.

Zuerst wird die Außenhautfolie 16 mit der Zwischenfolie 22 vorzugsweise durch Tiefziehen plastisch umgeformt, um eine Krümmung und eine Vertiefung 26 zu bilden. In diese Vertiefung 26 wird die Führungsschiene 24 eingelegt. Die Zwischenfolie 22 ist so zwischen der Führungsschiene 24 und der angrenzenden Außenhautfolie 16 positioniert, daß jeglicher direkter Kontakt zwischen der Führungsschiene 24 und der Außenhautfolie 16 verhindert ist. Die Führungsschiene 24 wird mit der Zwischenfolie 22 und der Außenhautfolie 16 in eine Schäum- oder Spritzform eingelegt, wobei ein Steg des Unterteils 40 der Schäum- oder Spritzform in den Innenraum der Führungsschiene 24 hineinragt.

Anschließend wird rückseitig hinterschäumt oder hinterspritzt, so daß die Innenschicht 18 erzeugt wird. Durch den Schäumdruck wird die Außenhautfolie 16 seitlich fest gegen die Führungsschiene 24 gepreßt, die jedoch aufgrund ihrer Festigkeit und der Unterstützung durch den Steg des Unterteils 40 der Schäum- oder Spritzform nicht oder kaum nachgibt. Dadurch wird aber die Außenhautfolie 16 plastisch verformt, und es bilden sich zu den Verankerungsvorsprüngen 32 komplementäre Einbuchtungen in der Zwischenfolie 22 und der Außenhautfolie 16. Somit ist eine form- und kraftschlüssige Verbindung zwischen der Führungsschiene 24 und der Einheit aus Außenhautfolie 16 und Innenschicht 18 gewährleistet. Bei dem Hinterschäumen bzw. -spritzen werden die Glasfaserabschnitte 20 eingeschossen.

Nach dem Ausschäumen und nach dem Ausreagieren des Kunststoffs fährt das Oberteil 38 nach oben. Das entstandene Verbundbauteil 12 wird der Schäum- oder Spritzform entnommen. Da die Zwischenfolie 22 vollflächig aufgebracht wurde, kann sie in den Bereichen, die nicht an der Führungsschiene 24 anliegen und nicht mehr benötigt werden, entfernt werden, z.B. indem sie längs der Oberkante der Führungsschiene 24 abgeschnitten wird.

Alternativ könnte die Zwischenfolie 22 nur Abschnitte der Außenhautfolie 16 abdecken oder an der Unterseite und den Seitenflächen der Führungsschiene 24 vor dessen Einbettung in die Vertiefung 26 angebracht sein.

### Bezugszeichenliste

- 10: Fahrzeugdach
- 12: Verbundbauteil
- 13: Dachabschnitt
- 14: Außenhaut
- 16: Außenhautfolie
- 18: Innenschicht
- 20: Glasfaserabschnitte
- 22: Zwischenfolie
- 24: Führungsschiene
- 26: Vertiefung
- 28: Boden
- 30: Seitenwände
- 32: Verankerungsvorsprung
- 34: Öffnung
- 36: Abdeckung
- 38: Oberteil
- 40: Unterteil

## Patentansprüche

1. Verbundbauteil, insbesondere Karosserieanbauteil für ein Fahrzeug, mit
einer durch eine Außenhautfolie (16) gebildeten Außenhaut (14), insbesondere des Fahrzeugs,
einer rückseitig der Außenhautfolie (16) durch Hinterschäumen oder -spritzen aufgebrachten Innenschicht (18) aus Kunststoff,
einem Montageteil, das in einer Vertiefung (26) der Außenhautfolie (16) sitzt und darin verankert ist,
**gekennzeichnet durch**
eine Zwischenfolie (22), die zwischen dem Montageteil und der Außenhautfolie (16) liegt und zumindest abschnittsweise einen direkten Kontakt zwischen Montageteil und Außenhautfolie (16) verhindert.

2. Verbundbauteil nach Anspruch 1, **dadurch gekennzeichnet, daß** das Montageteil von der Außenhautfolie (16) abschnittsweise umgeben und **dadurch** formschlüssig und/oder kraftschlüssig in der Vertiefung (26) verankert ist.

3. Verbundbauteil nach Anspruch 1 oder 2, **dadurch gekennzeichnet, daß** das Montageteil (24) an mindestens einer Seitenwand (30) mit wenigstens einem Verankerungsvorsprung (32) versehen ist.

4. Verbundbauteil nach Anspruch 3, **dadurch gekennzeichnet, daß** der Verankerungsvorsprung (32) in einer entsprechenden Vertiefung (26) der Außenhautfolie (16) aufgenommen ist.

5. Verbundbauteil nach einem der vorhergehenden Ansprüche, **dadurch gekennzeichnet, daß** die Innenschicht (18) die Außenhautfolie (16) und die Zwischenfolie (22) im Bereich der Vertiefung (26) fest gegen das Montageteil drückt.

6. Verbundbauteil nach einem der vorhergehenden Ansprüche, **dadurch gekennzeichnet, daß** die Zwischenfolie (22) so groß ist, daß sie jeglichen direkten Kontakt zwischen Montageteil und Außenhautfolie (16) verhindert.

7. Verbundbauteil nach einem der vorhergehenden Ansprüche, **dadurch gekennzeichnet, daß** das Montageteil eine Schiene, insbesondere aus Aluminium ist.

8. Verbundbauteil nach Anspruch 7, **dadurch gekennzeichnet, daß** die Schiene eine Führungsschiene (24) für den Deckel eines Spoilerdachs ist.

9. Verbundbauteil nach einem der vorhergehenden Ansprüche, **dadurch gekennzeichnet, daß** es ein Dachmodul eines Fahrzeugs ist.

10. Verbundbauteil nach einem der vorhergehenden Ansprüche, **dadurch gekennzeichnet, daß** das Montageteil auf derjenigen Seite, die nicht von der Außenhautfolie (16) und der Zwischenfolie (22) bedeckt ist, über eine Öffnung (34) von außen zugänglich ist.

11. Verbundbauteil nach Anspruch 10, **dadurch gekennzeichnet, daß** die Öffnung (34) von einer beweglichen Abdeckung (36) bedeckt ist.

12. Verbundbauteil nach Anspruch 11, **dadurch gekennzeichnet, daß** die Abdeckung (36) einen Rand der Zwischenfolie (22) im Bereich des Montageteils (24) bedeckt.

13. Verbundbauteil nach Anspruch 11 oder 12, **dadurch gekennzeichnet, daß** die Abdeckung (36) über Fortsätze am Montageteil angebracht ist.

14. Verbundbauteil nach einem der vorhergehenden Ansprüche, **dadurch gekennzeichnet, daß** die Innenschicht (18) mit Glasfaserabschnitten (20) verstärkt ist.

15. Verbundbauteil nach einem der vorhergehenden Ansprüche, **dadurch gekennzeichnet, daß** die Zwischenfolie (22) eine PE-Folie ist.

16. Verfahren zum Herstellen eines Verbundbauteils, insbesondere nach einem der vorhergehenden Ansprüche, **gekennzeichnet durch** folgende Schritte:
a) Bereitstellen einer **durch** eine Außenhautfolie (16) gebildeten, nach dem Herstellen von außen sichtbaren Außenhaut (14) des Verbundbauteils (12), wobei die Außenhautfolie (16) eine Vertiefung (26) aufweist,
b) Einlegen eines Montageteils in die Vertiefung (26), wobei eine Zwischenfolie (22) zwischen Montageteil und angrenzender Außenhautfolie (16) positioniert ist oder wird, die wenigstens abschnittsweise einen direkten Kontakt zwischen Montageteil und Außenhautfolie (16) verhindert,
c) Einlegen des Montageteils samt Zwischenfolie (22) und Außenhautfolie (16) in eine Schäum- oder Spritzform,
d) rückseitiges Hinterschäumen oder ―spritzen der Außenhautfolie (16), wobei eine Innenschicht (18) erzeugt und dabei ein Druck auf die Außenhautfolie (16) ausgeübt wird, der die Außenhautfolie (16) gegen das Montageteil drückt und es fest in der Vertiefung (26) verankert.

17. Verfahren nach Anspruch 16, **dadurch gekennzeichnet, daß** die Außenhautfolie (16) aus einem thermoplastischen Material ist, insbesondere eine zweischichtige Koextrusionsfolie ist.

18. Verfahren nach Anspruch 16 oder 17, **dadurch gekennzeichnet, daß** die Außenhautfolie (16) vor Schritt b) durch Tiefziehen plastisch umgeformt wird.

19. Verfahren nach Anspruch 18, **dadurch gekennzeichnet, daß** die Außenhautfolie (16) beim Tiefziehen die Umfangsform des Montageteils im Bereich der Vertiefung (26) weitgehend annimmt.

20. Verfahren nach einem der Ansprüche 15 bis 19, **dadurch gekennzeichnet, daß** beim Hinterschäumen oder -spritzen Glasfaserabschnitte (20) in den flüssigen Kunststoff eingebracht werden.

21. Verfahren nach einem der Ansprüche 15 bis 20, **dadurch gekennzeichnet, daß** die Zwischenfolie (22) eine die Außenhautfolie (16) wenigstens großteils abdeckende Schutzfolie ist.

22. Verfahren nach Anspruch 21, **gekennzeichnet durch** den Schritt
e) Entfernen der Schutzfolie von der Außenhautfolie (16) ausgenommen im Bereich zwischen Montageteil und Außenhautfolie (16).
